# FASCICULE DE BREVET EUROPEEN

(11) **EP 3 524 863 B1**
(45) Date de publication et mention de la délivrance du brevet: **07.04.2021**
(21) Numéro de dépôt: 19155675.2
(22) Date de dépôt: 06.02.2019
(51) Int. Cl.: F16K 31/00, G05D 23/02

(54) **VANNE THERMOSTATIQUE A TRIPLE CLAPETS**
THERMOSTATVENTIL MIT DREIFACH-KLAPPEN
THERMOSTATIC VALVE WITH TRIPLE CHECK VALVES

(30) Priorité: 09.02.2018 FR 1851114
(43) Date de publication de la demande: 14.08.2019
(73) Titulaire: NOVARES France, 92140 Clamart (FR)
(72) Inventeur: QUEVALLIER, Jean-Claude, 59810 LESQUIN (FR); NIKABWALA, Héritier, 62300 LENS (FR); BAILLET, Dominique, 62200 CARVIN (FR)
(74) Mandataire: Delorme, Nicolas

(56) Documents cités:
- WO-A1-2016/020916
- WO-A2-2016/046340
- GB-A- 2 401 166
- US-A1- 2008 245 881
- US-A1- 2009 145 374

## Description

La présente invention concerne le domaine des vannes thermostatiques. Une vanne thermostatique est typiquement utilisée dans le domaine de la régulation thermique automatique pour des circuits de fluide (gaz, eau, huile,...).

De manière connue, une vanne thermostatique comprend un corps creux fermé percé d'une première ouverture et d'une deuxième ouverture de circulation de fluide et comprenant un obturateur séparant les deux ouvertures de manière étanche. L'obturateur est sensible à la température du fluide de manière à s'ouvrir au-dessus d'une température seuil et à se refermer en dessous de ladite température seuil.

Une application illustrative dans le domaine automobile est la réalisation de boitiers d'entrée d'eau (convergent) ou de boitiers de sortie d'eau (divergent).

L'obturateur d'une vanne thermostatique comprend typiquement un actionneur thermostatique, telle une capsule à cire, et un clapet actionné par l'actionneur thermostatique. Une capsule à cire comprend un cylindre rempli d'une cire sensible à la température. La cire repousse une tige sous l'effet d'un important changement de volume accompagnant un changement de phase solide/liquide, se produisant à une température seuil. Un tel actionneur thermostatique commande automatiquement la course d'ouverture du clapet dans une plage de température précise, de l'ordre de 10°C, à partir d'une température seuil ou température de début d'ouverture.

Les documents WO 2016/046340 A2 et WO 2016/020916 A1 divulguent des vannes thermostatiques connues qui sont utilisées dans les circuits de refroidissement de moteur thermique, notamment ceux des véhicules automobiles.

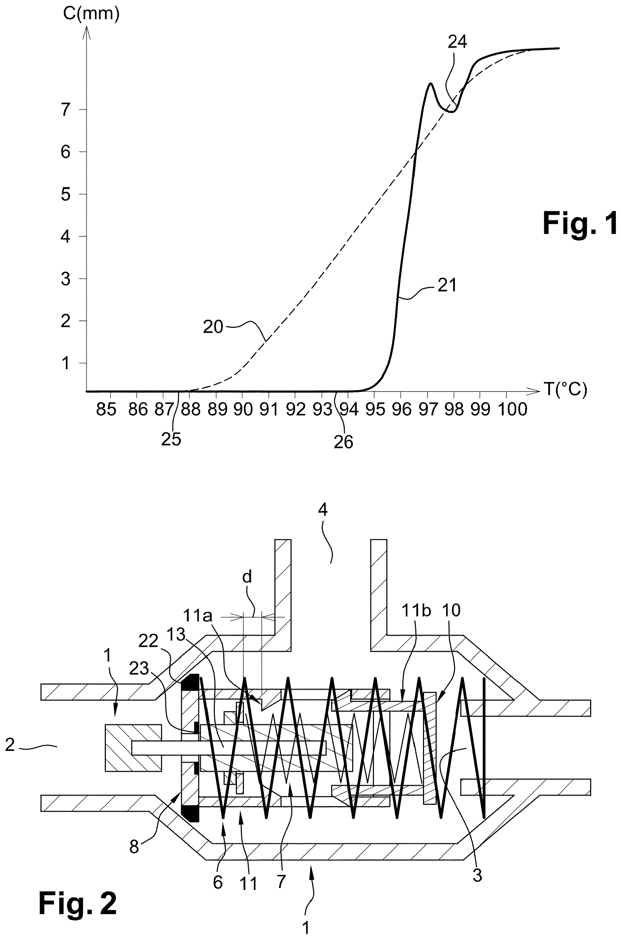

La figure 1 montre une courbe 20, illustrant les variations nominales de la course d'ouverture C du clapet en fonction de la température T du fluide circulant dans une vanne thermostatique. Il peut être observé une température seuil 25.

Les conditions de fonctionnement de la vanne thermostatique, les conditions de débit et de viscosité du fluide en circulation, peuvent être source d'une différence entre les pressions appliquées d'un côté et de l'autre côté du clapet. Aussi l'actionneur thermostatique doit, lors de l'ouverture du clapet, développer un effort supplémentaire afin de vaincre cette différence de pression. Ce nécessaire effort supplémentaire introduit un retard à l'ouverture équivalent à une augmentation de la température seuil. Aussi la vanne thermostatique présente une sensibilité à la pression différentielle modifiant sa température seuil.

La figure 1 montre ainsi une courbe 21, illustrant les variations réelles de la course C du clapet en fonction de la température T du fluide dans une vanne thermostatique. Il peut être observé une température seuil 26 largement décalée par rapport à la température seuil 25.

Pour des raisons économiques, le clapet est classiquement disposé sensiblement perpendiculaire à la tige et donc à l'axe de l'actionneur thermostatique et est actionné en translation. La fermeture du clapet est assurée par un moyen de rappel, tel un ressort, antagoniste de l'actionneur thermostatique.

Le clapet présente avantageusement une section adaptée au passage du débit maximum prévu pour la vanne. Aussi l'effet de la pression différentielle du fluide, s'appliquant à la section du clapet, est multiplié par le rapport de la section du clapet à la section motrice de l'actionneur thermostatique et augmente donc avec la pression différentielle et avec le débit maximal. Une pression différentielle de 1 bar qui peut être rencontrée dans certaines conditions d'utilisations extrêmes peut conduire à une pression ressentie par l'actionneur thermostatique de 100 bars et conduire à un décalage de la température seuil de +/-5°. Un décalage positif peut entraîner le moteur en situation critique de dépassement de sa température de fonctionnement, et entraîner une usure prématurée.

Jusqu'à présent ce décalage était intégré lors de la conception en sélectionnant une vanne thermostatique dont la température seuil était réduite ou augmentée du décalage observé à la pression différentielle maximale. Cependant en l'absence de pression différentielle, la vanne thermostatique s'ouvre à une température réduite ou augmentée. Les performances des moteurs modernes sont de plus en plus optimisées, et un fonctionnement à une température réduite entraîne une augmentation préjudiciable tant de la consommation que des rejets polluants sur la plupart des cycles d'utilisation, du fait d'un fonctionnement du moteur en dessous de sa température optimale.

L'optimisation du rendement des moteurs thermiques et les exigences en termes de rejets polluants amènent les motoristes à faire fonctionner les moteurs à des températures élevées, aussi la marge qui sépare les conditions de température optimales des conditions de température excessives, mettant en risque la durabilité et la fiabilité mécanique des moteurs, se réduit. Afin de maîtriser cette marge de sécurité il est important de limiter le décalage de la température seuil en réponse à une pression différentielle.

En plus du décalage de la température seuil, la pression différentielle entraîne un manque de progressivité à l'ouverture. Le brusque équilibrage, en début d'ouverture du clapet, de la pression différentielle, entrainant une réduction importante de la force résistante à l'ouverture, provoque une ouverture brutale. Cette ouverture brutale, s'accompagne d'un fort débit, produisant un refroidissement rapide qui provoque un dépassement important du point de régulation, entrainant à son tour une réponse à la fermeture de l'actionneur thermostatique. Ceci est éventuellement suivi par des oscillations ouverture/fermeture préjudiciables en ce qu'elles occasionnent des risques de chocs thermiques et de sollicitations en pression cyclée des organes du circuit de régulation et donc des risques de défaillance ou de réduction de la durée de vie et une difficulté de convergence de la régulation. Ceci apparaît sous forme d'oscillations 24 sur la caractéristique 21 de la figure 1.

Afin de réduire la sensibilité à la pression différentielle d'une vanne thermostatique plusieurs solutions sont possibles.

Une première solution consiste à réduire la section du clapet exposée à la charge de la pression différentielle. Une telle réduction entraîne également une réduction préjudiciable du débit maximal vanne ouverte.

Une autre solution utilisée pour les applications à fortes charges (moteurs de poids lourds ou d'automobiles à hautes performances) consiste à employer un clapet de forme cylindrique d'axe aligné avec l'axe de l'actionneur thermostatique. Un tel agencement est ainsi insensible à la pression différentielle car la résultante des efforts induits par cette pression n'entre pas en opposition avec la force développée par l'actionneur thermostatique. Cette solution en ce qu'elle nécessite un clapet cloche métallique et qu'elle rend l'étanchéité difficile à réaliser s'avère très onéreuse.

Une autre solution consiste à utiliser deux vannes thermostatiques : une petite vanne thermostatique à petit clapet et une grosse vanne thermostatique à gros clapet. La petite vanne a pour fonction d'équilibrer les pressions. La grosse vanne a pour fonction de passer le débit. La petite vanne doit s'ouvrir la première. Ainsi la grosse vanne n'a plus à lutter contre les effets de la pression différentielle. Une telle solution est onéreuse et encombrante, et présente une difficulté pour étager de façon pertinente les températures d'ouverture et de fermeture des deux vannes thermostatiques, et provoque un certain flou dans la régulation de température.

Une autre solution consiste à utiliser une vanne thermostatique à deux clapets, un petit clapet et un grand clapet qui s'ouvrent en séquence selon la course de l'actionneur thermostatique. Tous les systèmes connus de ce type sont de conception chère et encombrante.

Dans la demande de brevet français no. 17/57176 déposée le 28 juillet 2017 au nom de la Demanderesse, une vanne thermostatique a par ailleurs été décrite permettant d'améliorer ces systèmes afin de les rendre moins sensibles aux pressions différentielles de plus en plus importantes, aptes à fonctionner à des températures très élevées, en présentant une meilleure précision de la température seuil et en offrant une progressivité d'ouverture.

La présente invention vise à améliorer encore la solution décrite dans la demande de brevet susmentionnée, en particulier pour qu'elle incorpore au sein du même boîtier les fonctionnalités d'un clapet de by-pass.

En effet, certains boîtiers thermostatiques sont équipés d'une branche de retour direct vers le bloc moteur, appelée by-pass, qui permet, lorsque le clapet principal est fermé, de faire circuler le fluide de refroidissement en circuit court, par retour direct vers le bloc moteur au moyen d'une pompe. Cette circulation permet une montée rapide en température du moteur sans risque de point chaud dans le bloc moteur. Afin d'optimiser la circulation du fluide de refroidissement vers le radiateur, il est connu, lorsque la température du fluide de refroidissement a dépassé la température seuil et a provoqué l'ouverture du clapet principal, d'obturer ce conduit by-pass par un clapet by-pass commandé en conjugaison avec le clapet principal. La combinaison du clapet principal et du clapet by-pass permet ainsi d'alternativement faire circuler le fluide de refroidissement soit vers le conduit by-pass, soit vers le conduit menant au radiateur. Généralement, le clapet by-pass est disposé en opposition axiale avec le clapet principal et est actionné par le même actionneur thermostatique. La fermeture du conduit by-pass se produit lorsque le clapet by-pass vient fermer à plat l'extrémité du conduit by-pass. Afin de protéger mécaniquement le système, il est généralement prévu d'interposer un ressort de compensation entre l'actionneur thermostatique et le clapet by-pass de manière à absorber la course de l'actionneur thermostatique au-delà de la température de fermeture du clapet by-pass. Les systèmes actuels incorporant à la fois un thermostat double clapet et un clapet by-pass nécessitent donc d'utiliser trois ressorts, à savoir un ressort principal de contrôle du gros clapet, un ressort secondaire de contrôle du petit clapet et un ressort de compensation pour le clapet by-pass. Outre son coût prohibitif, un tel montage présente l'inconvénient d'accroître de manière importante l'encombrement du système, ce qui est difficilement compatible avec le besoin de compacité des boîtiers thermostatiques.

La présente invention vise donc à proposer une vanne thermostatique combinant un thermostat à double clapet et un clapet by-pass et ne présentant pas les inconvénients précités des solutions existantes.

A cet effet, selon un premier aspect, l'invention a pour objet une vanne thermostatique comprenant un corps creux fermé, une première ouverture de circulation de fluide, une deuxième ouverture de circulation de fluide et une troisième ouverture de circulation de fluide débouchant dans le corps, et un obturateur séparant sélectivement la première ouverture de la deuxième ouverture et/ou troisième ouverture et comprenant :
- un actionneur thermostatique sensible aux variations de température du fluide circulant dans le corps,
- un moyen de rappel primaire,
- un moyen de rappel secondaire,
- un clapet primaire apte à s'ouvrir sous l'action de l'actionneur thermostatique et à se fermer sous l'action du moyen de rappel primaire,
- un clapet secondaire apte à s'ouvrir sous l'action de l'actionneur thermostatique et à se fermer sous l'action du moyen de rappel secondaire, et
- un clapet tertiaire apte à se fermer sous l'action de l'actionneur thermostatique et à s'ouvrir sous l'action du moyen de rappel primaire,
dans laquelle l'obturateur est conformé de manière à ce que l'actionneur thermostatique ouvre d'abord le clapet secondaire puis le clapet primaire, avec un décalage, avant de fermer le clapet tertiaire, et dans laquelle le clapet secondaire est configuré pour sélectivement ouvrir et fermer une lumière découpée dans le clapet primaire.

Selon d'autres caractéristiques, la vanne thermostatique de l'invention comporte une ou plusieurs des caractéristiques optionnelles suivantes considérées seules ou selon toutes les combinaisons possibles :
- le clapet primaire, respectivement le clapet tertiaire, est configuré pour sélectivement ouvrir et fermer la première ouverture, respectivement la deuxième ouverture.
- le clapet primaire, le clapet secondaire et le clapet tertiaire sont coaxiaux.
- l'actionneur thermostatique possède deux points d'actionnement, à savoir un premier point d'actionnement solidaire du corps et un deuxième point d'actionnement solidaire du clapet secondaire, et est apte à varier la distance et/ou l'effort entre ces deux points d'actionnement.
- le moyen de rappel secondaire comprend deux points d'actionnement, à savoir un premier point d'actionnement, correspondant à une extrémité du moyen de rappel secondaire, qui est solidaire en translation du clapet secondaire, et un deuxième point d'actionnement, correspondant à l'autre extrémité du moyen de rappel secondaire, qui est solidaire en translation du clapet tertiaire, et est apte à varier l'effort exercé en fonction de la distance entre ces deux points d'actionnement.
- le moyen de rappel secondaire exerce sur le clapet secondaire une action antagoniste à celle de l'actionneur thermostatique et sur le clapet tertiaire une action antagoniste à celle du moyen de rappel primaire lorsque le clapet tertiaire est ouvert et une action agoniste à celle du moyen de rappel primaire lorsque le clapet tertiaire est fermé.
- le moyen de rappel primaire comprend deux points d'actionnement, à savoir un premier point d'actionnement, correspondant à une extrémité du moyen de rappel primaire, qui est solidaire en translation du clapet primaire, et un deuxième point d'actionnement, correspondant à l'autre extrémité du moyen de rappel primaire, qui est en appui sur le corps, et est apte à varier l'effort exercé en fonction de la distance entre ces deux points d'actionnement.
- le moyen de rappel primaire exerce sur le clapet primaire une action antagoniste à celle de l'actionneur thermostatique.
- la vanne thermostatique comprend en outre une cage solidaire du clapet primaire et conformée pour être entraînée, avec le décalage, par l'actionneur thermostatique.
- la cage enveloppe l'actionneur thermostatique et est percée pour permettre une irrigation de l'actionneur thermostatique.
- l'actionneur thermostatique comprend une tige et un cylindre comprenant, à une extrémité, une bouche permettant une sortie de la tige selon son axe et, à l'autre extrémité, un culot, et dans laquelle une extrémité distale de la tige est solidaire du corps et la bouche est solidaire du clapet secondaire.
- la vanne thermostatique comprend en outre une rondelle configurée pour, lors de l'extension de l'actionneur thermostatique, être entrainée axialement par une collerette annulaire disposée en saillie à la périphérie du cylindre et venir en contact avec une butée interne de la cage, provoquant ainsi l'ouverture du clapet primaire, la distance axiale entre la rondelle et la butée interne, les clapets primaire et secondaire étant tous deux fermés, définissant le décalage.
- la cage comprend une première partie et une deuxième partie coulissant axialement à l'intérieur de la première partie, la première partie possédant une première face d'extrémité définissant le clapet primaire et la deuxième partie possédant une deuxième face d'extrémité définissant le clapet tertiaire.
- le moyen de rappel secondaire est disposé à l'intérieur de la cage partiellement à l'intérieur de la première partie et partiellement à l'intérieur de la deuxième partie et de telle sorte qu'il tend à éloigner la deuxième face d'extrémité de la première face d'extrémité.
- la première partie est munie d'un rebord interne contre lequel vient buter un rebord externe de la deuxième partie, lorsque le clapet tertiaire est ouvert, l'augmentation de la température du fluide au-delà d'une température de fermeture du clapet tertiaire amenant progressivement ledit rebord externe à s'éloigner axialement dudit rebord interne.
- le moyen de rappel secondaire, respectivement le moyen de rappel primaire, est dimensionné pour appliquer un effort garantissant la fermeture du clapet secondaire, respectivement du clapet primaire, éventuellement augmenté de manière à tenir compte d'une contre-pression.
- la section d'ouverture du clapet primaire, respectivement du clapet secondaire, est dimensionnée pour passer un débit maximal, respectivement un débit minimal.

Selon un autre aspect, l'invention a pour objet un boîtier d'entrée de fluide ou de sortie de fluide, pour régulation thermostatique d'un circuit de fluide, comprenant une telle vanne thermostatique.

Selon un autre aspect, l'invention a pour objet l'utilisation d'un tel boîtier pour la régulation d'un liquide de refroidissement pour moteur de véhicule automobile, dans laquelle la troisième ouverture forme une entrée pour un liquide de refroidissement provenant d'un moteur d'un véhicule automobile, la première ouverture formant une sortie de liquide menant à un radiateur dudit véhicule automobile et la deuxième ouverture formant une sortie de liquide menant à nouveau au moteur.

L'invention sera davantage comprise à la lecture de la description non limitative qui va suivre, faite en référence aux figures ci-annexées.
- La figure 1, déjà décrite, représente comparativement les courbes course - température nominale et réelle,
- la figure 2 représente, en vue sectionnelle schématique, une vanne thermostatique selon la présente invention, les clapets primaire et secondaire étant fermés et le clapet tertiaire étant ouvert,
- la figure 3 est une vue en éclatée de la vanne thermostatique représentée sur la figure 2,

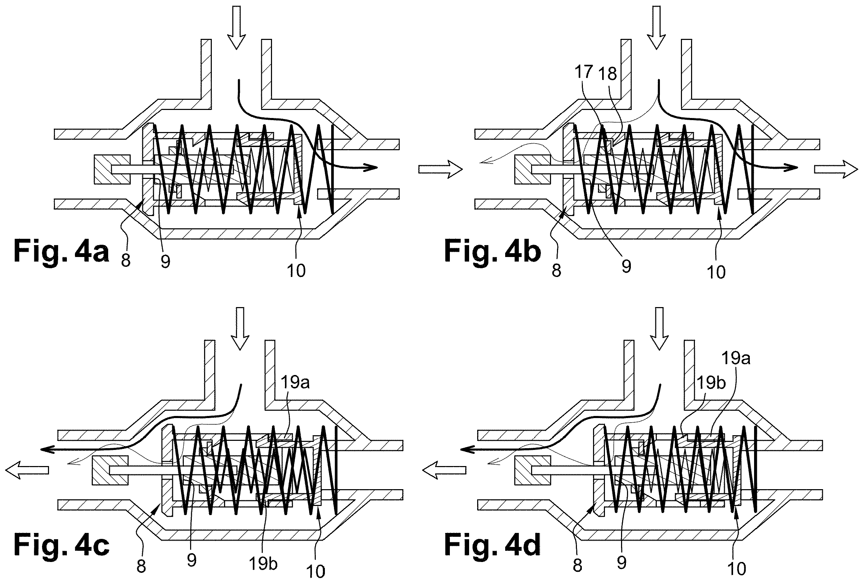

- les figures 4a-4d représentent, en vue sectionnelle schématique, un boîtier de sortie de liquide équipé de la vanne thermostatique de la figure 2, respectivement avec les clapets primaire et secondaire fermés et le clapet tertiaire ouvert (figure 4a), avec le clapet primaire fermé et les clapets secondaire et tertiaire ouverts (figure 4b), avec les clapets primaire et secondaire ouverts et le clapet tertiaire fermé, le moyen de rappel secondaire étant faiblement comprimé (figure 4c) et avec les clapet primaire et secondaire ouverts et le clapet tertiaire fermé, le moyen de rappel secondaire étant fortement comprimé (figure 4d),
- les figures 5a et 5b représentent, en vue sectionnelle schématique, une vanne thermostatique conforme à l'invention (sur la figure du haut) et une vanne thermostatique non conforme à l'invention (sur la figure du bas), respectivement avec le clapet primaire fermé et le clapet tertiaire ouvert (figure 5a) et avec le clapet primaire ouvert et le clapet tertiaire fermé (figure 5b).

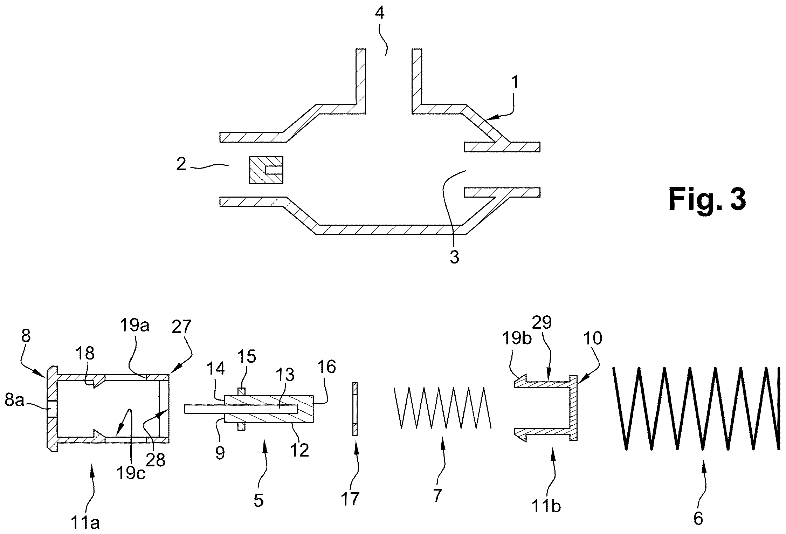

L'invention concerne une vanne thermostatique. Telle qu'illustrée aux figures 2 et 3, une telle vanne thermostatique comprend un corps 1 creux fermé. Ceci signifie que le corps 1 forme une cavité fermée à l'exclusion d'une première ouverture 2 et d'une deuxième ouverture 3, qui débouchent dans le corps 1 et permettent une entrée et/ou une sortie de fluide. Les première et deuxième ouvertures 2, 3 sont sensiblement alignées selon une même direction axiale. Par la suite, le terme « axial » ou « axialement » sera utilisé pour désigner toute direction parallèle à ladite direction axiale. Comme expliqué par la suite en référence aux figures 4a à 4d, dans le cas d'une vanne thermostatique destinée à faire circuler un liquide de refroidissement pour un moteur, il est prévu une troisième ouverture 4 dans le corps 1 pour l'arrivée du fluide de refroidissement provenant du moteur, la première ouverture 2 formant une sortie de fluide menant au radiateur et la deuxième ouverture 3 formant une sortie de fluide menant à nouveau au moteur. La vanne thermostatique comprend encore un obturateur séparant sélectivement la première ouverture 2 de la deuxième et/ou troisième ouverture 3, 4. Ledit obturateur est configuré pour être fermé en dessous d'une première température seuil et ainsi séparer de manière étanche la première ouverture 2 de la deuxième et/ou troisième ouverture 3, 4 et être ouvert au-dessus de la première température seuil de manière à mettre en relation fluidique la première ouverture 2 avec la deuxième et/ou troisième ouverture 3, 4. Par ailleurs, l'obturateur est également configuré pour empêcher à nouveau toute relation fluidique entre la première ouverture 2 et la deuxième ouverture 3 au-dessus d'une deuxième température seuil tout en maintenant une relation fluidique entre la première ouverture 2 et la troisième ouverture 4.

Pour cela, l'obturateur comprend un actionneur thermostatique 5, un moyen de rappel primaire 6, un moyen de rappel secondaire 7, un clapet primaire 8, un clapet secondaire 9 et un clapet tertiaire 10. Le clapet primaire 8 est apte à s'ouvrir sous l'action de l'actionneur thermostatique 5 et à se fermer lorsque rappelé par le moyen de rappel primaire 6. Le clapet secondaire 9 est apte à s'ouvrir sous l'action de l'actionneur thermostatique 5 et à se fermer lorsque rappelé par le moyen de rappel secondaire 7. Le clapet tertiaire 10 est apte à se fermer sous l'action de l'actionneur thermostatique 5 et à s'ouvrir sous l'action du moyen de rappel primaire 6.

Selon une caractéristique, l'obturateur est conformé de manière à ce que l'actionneur thermostatique 5 ouvre d'abord le clapet secondaire 9 puis le clapet primaire 8, avec un décalage, avant de fermer le clapet tertiaire 10.

Le clapet secondaire 9 est avantageusement dimensionné pour laisser passer un petit débit. Aussi il présente une section très faible et offre peu de résistance en cas de présence d'une pression différentielle. Il n'est ainsi pas ou peu sensible à la pression différentielle. Son ouverture, qui s'effectue sensiblement à la première température seuil, autorise un petit débit et permet de réaliser un équilibrage des pressions de part et d'autre de l'obturateur et donc de part et d'autre du clapet primaire 8. Aussi, lors de son ouverture postérieure, le clapet primaire 8 ne rencontre pas de résistance occasionnée par une pression différentielle, cette dernière ayant été préalablement sensiblement annulée.

Selon une autre caractéristique, le clapet primaire 8 est découpé d'une lumière 8a permettant le passage du débit du clapet secondaire 9, et ladite lumière 8a forme le siège du clapet secondaire 9. Le clapet secondaire 9 est apte à sélectivement libérer ou obturer ladite lumière.

Selon une autre caractéristique, le clapet primaire 8, le clapet secondaire 9 et le clapet tertiaire 10 sont coaxiaux. Cette caractéristique permet avantageusement de simplifier l'actionnement des clapets primaire 8, secondaire 9 et tertiaire 10 au moyen d'un même actionneur thermostatique 5 et contribue à obtenir une vanne thermostatique particulièrement compacte.

Selon une autre caractéristique, l'actionneur thermostatique 5 comprend typiquement deux points d'actionnement et est apte à faire varier la distance et/ou l'effort présent entre ces deux points d'actionnement. Un premier point d'actionnement est solidaire du corps 1 et le deuxième point d'actionnement est solidaire du clapet secondaire 9.

L'actionneur thermostatique 5 comprend un cylindre 12 et une tige 13 engagée dans le cylindre 12 selon son axe et apte à sortir au niveau d'une première extrémité ou bouche 14 du cylindre qui est solidaire du clapet secondaire 9. On nomme culot 16 l'autre extrémité du cylindre 12. Le premier point d'actionnement est situé à une extrémité distale de la tige 13 qui est solidaire du corps 1. Le deuxième point d'actionnement est situé à une collerette annulaire 15 formée en saillie le long de la périphérie du cylindre 12.

Lorsque cela n'est pas autrement précisé, il est considéré que l'actionneur thermostatique 5 réalise une extension, par sortie de la tige 13, lorsque la température augmente et devient supérieure à la première température seuil. Aussi l'actionneur thermostatique 5 tend à déplacer le clapet secondaire 9 relativement au corps 1 où est placé le premier point d'actionnement. Dans ce cas particulier, l'actionneur thermostatique 5 éloigne le clapet secondaire 9 relativement à l'endroit du corps 1 où est fixé le premier point d'actionnement.

Selon une autre caractéristique, le moyen de rappel secondaire 7 comprend deux points d'actionnement, à savoir un premier point d'actionnement, ici une extrémité du moyen de rappel secondaire 7, qui est solidaire en translation du clapet secondaire 9, et un deuxième point d'actionnement, ici l'autre extrémité du moyen de rappel secondaire 7, qui est solidaire en translation du clapet tertiaire 10. Le moyen de rappel secondaire 7 est apte à varier l'effort exercé en fonction de la distance entre ces deux points d'actionnement. Ainsi selon le montage et le type de moyen de rappel, cette caractéristique conduit à un éloignement ou à un rapprochement des deux clapets 9, 10. Lorsque cela n'est pas autrement précisé, il est considéré que les moyens de rappel primaire et secondaire 6, 7 travaillent en compression. Par conséquent, dans le mode de réalisation illustré sur la figure 2, le moyen de rappel secondaire 7 agit de manière à rapprocher le clapet secondaire 9 de son siège, disposé dans le clapet primaire 8, et ainsi tend à fermer le clapet secondaire 9.

Le moyen de rappel secondaire 7 exerce donc sur le clapet secondaire 9 une action antagoniste à celle de l'actionneur thermostatique 5. Ainsi, l'actionneur thermostatique 5 assure l'ouverture du clapet secondaire 9 et le moyen de rappel secondaire 7 assure la fermeture du clapet secondaire 9 en plaquant ledit clapet secondaire 9 contre son siège.

Le clapet secondaire 9 et/ou son siège est avantageusement recouvert d'élastomère 23. Ainsi une fermeture avec un effort de pression garantit l'étanchéité. Dans le mode de réalisation illustré sur la figure 2, l'actionneur thermostatique 5 agit en s'étendant de manière à ouvrir le clapet secondaire 9, en l'éloignant de son siège situé dans le clapet primaire 8 et en le rapprochant de la deuxième ouverture 3. Le moyen de rappel secondaire 7, antagoniste, tend au contraire à fermer le clapet secondaire 9, en le rapprochant du clapet primaire 8.

Ainsi, lorsque la température dépasse la première température seuil, l'actionneur thermostatique 5 ouvre le clapet secondaire 9 et s'oppose au moyen de rappel secondaire 7 en le comprimant. En revanche, lorsque la température repasse en-dessous de la première température seuil, l'effort exercé par l'actionneur thermostatique 5 n'est plus suffisant pour comprimer le moyen de rappel secondaire 7. Ce dernier repousse donc l'actionneur thermostatique 5 et ferme le clapet secondaire 9.

Dans le cas où l'actionneur thermostatique 5 est une capsule à cire, un tel moyen de rappel antagoniste est nécessaire, en ce qu'une capsule à cire n'est active qu'en extension. La cire lors de son changement d'état solide/liquide lors d'une montée en température est capable de repousser la tige 13. Cependant, la cire, lors d'une baisse de température, n'est pas capable de tirer la tige 13 afin de la faire rentrer dans le cylindre 12.

Selon une autre caractéristique, la vanne thermostatique comprend encore une cage 11. Cette cage 11 est avantageusement solidaire du clapet primaire 8 et conformée pour être entraînée, avec un décalage, par l'actionneur thermostatique 5. Ainsi dans le mode de réalisation illustré sur la figure 2, une face d'extrémité de la cage 11, qui est proche de la première ouverture 2, forme le clapet primaire 8, lorsqu'elle vient se loger dans son siège formé dans le corps 1. La cage 11 comprend en outre une butée interne 18 distante axialement d'une rondelle 17 solidaire en translation de l'actionneur thermostatique 5 lorsque la vanne est dans son mode de fonctionnement représenté sur la figure 2, à savoir lorsque les clapets primaire et secondaire sont tous deux fermés. La rondelle 17 sera avantageusement entrainée axialement par la collerette annulaire 15 lors de l'extension de l'actionneur thermostatique et viendra entrer en contact avec la butée interne 18 de la cage 11 après une certaine course, entrainant ainsi la cage 11 dans son mouvement. Ce mouvement de la cage 11 est alors appliqué au clapet primaire 8 et provoque son ouverture. La distance d entre la rondelle 17 et la butée interne 18 avant l'extension de l'actionneur thermostatique 5, soit la distance que la rondelle 17 parcourt avant de venir en butée contre la cage 11 et commencer à ouvrir le clapet primaire 8, définit ainsi un décalage. Dans le mode de réalisation illustré sur la figure 2, l'actionneur thermostatique 5 ouvre le clapet secondaire 9 dès le début de son extension, ce décalage constitue un retard à l'ouverture du clapet primaire 8 par rapport au clapet secondaire 9.

Selon une autre caractéristique, la cage 11 est creuse et enveloppe l'actionneur thermostatique 5. Cette caractéristique permet un rangement optimal des volumes. Combinée avec la caractéristique de coaxialité, elle permet la réalisation d'une vanne thermostatique très compacte. La cage 11 est encore avantageusement percée, par exemple sur ses flans, afin que le fluide puisse la remplir et ainsi irriguer l'actionneur thermostatique 5. Cette caractéristique est particulièrement avantageuse lorsque l'actionneur thermostatique 5 est une capsule à cire. En effet, dans ce cas la partie sensible à la température est le cylindre 12. Aussi est-il important pour que la régulation soit efficace, que cet élément sensible soit irrigué par le fluide.

Selon une autre caractéristique, le moyen de rappel primaire 6 comprend deux points d'actionnement, à savoir un premier point d'actionnement, correspondant à une extrémité du moyen de rappel primaire 6, qui est solidaire en translation du clapet primaire 8, et un deuxième point d'actionnement, correspondant à l'autre extrémité du moyen de rappel primaire 6, qui est en appui sur le corps 1. Ainsi selon le montage et le type de moyen de rappel, cette caractéristique conduit à un éloignement ou à un rapprochement du clapet primaire 8 relativement au corps 1. Selon le mode de réalisation illustré à la figure 2, le moyen de rappel primaire 6 est un moyen de rappel travaillant en compression. Il agit donc de manière à éloigner le clapet primaire 8 (et la cage 11 solidaire dudit clapet primaire 8) du deuxième point d'actionnement et ainsi à rapprocher le clapet primaire 8 de son siège, situé dans le corps 1, mais du côté opposé au deuxième point d'actionnement, et ainsi tend à fermer le clapet primaire 8.

Le moyen de rappel primaire 6 est antagoniste à l'actionneur thermostatique 5. Ainsi, l'actionneur thermostatique 5 assurant l'ouverture du clapet primaire 8, le moyen de rappel primaire 6 assure la fermeture du clapet primaire 8 en plaquant ledit clapet primaire 8 contre son siège.

Le clapet primaire 8 et/ou son siège est avantageusement recouvert d'élastomère 22. Ainsi une fermeture avec un effort de pression garantit l'étanchéité. Dans le mode de réalisation illustré sur la figure 2, l'actionneur thermostatique 5 agit en s'étendant de manière à ouvrir le clapet primaire 8, en l'éloignant de son siège situé dans le corps 1, en le déplaçant vers le deuxième point d'actionnement du moyen de rappel primaire 6. Le moyen de rappel primaire 6, antagoniste, tend au contraire à fermer le clapet primaire 8, en l'éloignant de son deuxième point d'actionnement et en le rapprochant du corps 1.

Ainsi en fonction de la température, l'actionneur thermostatique 5 s'étend, s'oppose au moyen de rappel secondaire 7, ouvre le clapet secondaire 9 jusqu'au décalage d, puis ouvre le clapet primaire 8 et s'oppose au moyen de rappel primaire 6 en le comprimant lorsque la température dépasse une température intermédiaire comprise entre la première température seuil et la deuxième température seuil, tandis que le moyen de rappel primaire 6 reprend le dessus, repousse et ferme le clapet primaire 8 et réduit l'actionneur thermostatique 5 lorsque la température repasse en-dessous de ladite température intermédiaire.

Dans le cas où l'actionneur thermostatique 5 est une capsule à cire, au moins un tel moyen de rappel antagoniste est nécessaire, en ce qu'une capsule à cire n'est active qu'en extension.

Selon une autre caractéristique, l'actionneur thermostatique 5 est monté selon une configuration dans laquelle la tige 13 est fixe par rapport au corps 1, le cylindre 12 étant mobile.

La configuration illustrée sur la figure 2, correspondant à la deuxième configuration de l'actionneur thermostatique 5, est avantageuse en ce que la tige 13 est fixe. Une telle configuration est avantageuse en ce qu'elle permet le montage d'un crayon chauffant. Un crayon chauffant est un dispositif résistant qui permet par apport d'énergie électrique d'augmenter la température et ainsi de forcer l'extension de l'actionneur thermostatique 5 et l'ouverture des clapets 8, 9. L'apport d'énergie électrique nécessite des câbles qui entrent préférentiellement par l'extrémité distale de la tige 13. Le fait que cette extrémité distale soit fixe et en contact avec le corps 1 permet une intégration aisée de ces câbles au travers du corps 1 au droit de la position de l'extrémité distale de la tige 13.

Selon une autre caractéristique, rendue possible aussi par une configuration tige fixe, la bouche 14 de l'actionneur thermostatique 5 est solidaire du clapet secondaire 9. Ainsi lorsque l'extension de l'actionneur thermostatique 5 se produit, la bouche 14 s'éloigne du clapet primaire 8, siège du clapet secondaire 9, entraîne dans son mouvement le clapet secondaire 9 et réalise son ouverture. Selon un mode de réalisation avantageux, le clapet secondaire 9 est directement formé par la bouche 14 elle-même.

Avantageusement le moyen de rappel primaire 6 et le moyen de rappel secondaire 7 sont découplés. Aussi ils peuvent être dimensionnés sensiblement indépendamment l'un de l'autre. Selon une caractéristique, le moyen de rappel secondaire 7 est dimensionné pour appliquer un effort uniquement suffisant à garantir la fermeture du clapet secondaire 9. Ainsi cet effort comprend un effort nécessaire à comprimer un éventuel joint élastomère 23 disposé entre le clapet secondaire 9 et son siège, éventuellement augmenté d'un effort apte à lutter contre les effets d'une pression différentielle antagoniste éventuelle. Cependant l'effet d'une pression différentielle peut être très faible si la section du clapet secondaire 9 est faible. L'effort est encore augmenté d'une marge afin de tenir compte d'éventuels frottements ou impondérables.

Le dimensionnement du moyen de rappel secondaire 7 doit aussi satisfaire au bon maintien du clapet tertiaire 10 en position fermée.

Selon une caractéristique analogue, le moyen de rappel primaire 6 est dimensionné pour appliquer un effort uniquement suffisant à garantir la fermeture du clapet primaire 8. Ainsi cet effort comprend un effort nécessaire à comprimer un éventuel joint élastomère 22 disposé entre le clapet primaire 8 et son siège, éventuellement augmenté d'un effort apte à lutter contre les effets d'une pression différentielle antagoniste éventuelle. Cet effort est plus grand que celui homologue du moyen de rappel secondaire 7 si la surface du clapet primaire est plus grande que celle du clapet secondaire 8. L'effort est encore augmenté d'une marge afin de tenir compte d'éventuels frottements ou impondérables.

Il découle de ces dimensionnements que le moyen de rappel primaire 6 exerce un effort plus grand que le moyen de rappel secondaire 7. Ceci est une condition avantageuse pour le mode de réalisation illustré, afin de garantir que le clapet primaire 8 reste fermé tant que l'actionneur thermostatique 5 parcourt le décalage d, afin que le clapet secondaire 9 s'ouvre bien en premier, avant le clapet primaire 8 et que la caractéristique course-température soit répétable.

Un des deux moyens de rappel primaire 6 ou secondaire 7, soit préférentiellement le moyen de rappel primaire 6 en ce qu'il développe un effort plus important, est encore dimensionné pour être apte à repousser l'actionneur thermostatique 5 et à rentrer sa tige 13 lorsque la température repasse en dessous de la température intermédiaire ou la première température seuil.

Le séquencement temporel, obtenu par le décalage d, entre l'ouverture préalable du clapet secondaire 9 et l'ouverture ultérieure du clapet primaire 8 permet de les dédier à des fonctions distinctes. Ainsi, selon une caractéristique, le clapet primaire 8 est dédié au passage du débit maximal. Aussi, la section d'ouverture du clapet primaire 8 est dimensionnée en conséquence pour passer ledit débit maximal et présente une grande section. Selon une autre caractéristique, le clapet secondaire 9 est uniquement dédié à l'équilibrage des pressions à l'ouverture. Aussi, la section d'ouverture du clapet secondaire 9 n'a pas besoin d'être grande. Au contraire, elle est dimensionnée pour passer un débit minimal et présente une section nécessaire et suffisante à l'équilibrage des pressions différentielles afin d'offrir une faible résistance à l'ouverture en présence d'une pression différentielle. Avantageusement, la section du clapet secondaire 9 est réduite à la section de la tige 13.

Selon une autre caractéristique, la cage 11 comprend une première partie 11a et une deuxième partie 11b coulissant axialement à l'intérieur de la première partie 11a. La première partie 11a s'étend depuis une première extrémité définissant le clapet primaire 8 et une deuxième extrémité 27 percée d'une ouverture centrale 28 à travers laquelle coulisse la deuxième partie 11b. La deuxième partie 11b possède sensiblement une forme cylindrique et comprend une partie centrale tubulaire 29 comportant sur une première extrémité ouverte un rebord externe 19b formé en saillie, ladite partie centrale 29 s'étendant depuis ladite première extrémité jusqu'à une deuxième extrémité fermée 10, ladite deuxième extrémité fermée définissant le clapet tertiaire 10. La partie centrale 29 est avantageusement évidée de manière à partiellement loger le moyen de rappel secondaire 7, ledit moyen de rappel secondaire 7 étant également loger partiellement à l'intérieur de la première partie 11a de la cage 11. Ainsi disposé, le moyen de rappel secondaire 7 sera comprimé entre, d'une part, la face d'extrémité 10 de la deuxième partie 11b de la cage 11 et, d'autre part, la rondelle 17 précédemment citée. Dans la position représentée sur la figure 2, le moyen de rappel secondaire 7 tend à éloigner la face d'extrémité 10 de la première ouverture 2, et donc tend à rapprocher le clapet tertiaire 10 de son siège situé sur le corps 1, ledit siège étant dans le cas illustré une zone annulaire bordant la deuxième ouverture 3. Il repousse ainsi la deuxième partie 11b de la cage 11 de telle sorte que le rebord externe 19b vient buter contre un rebord interne 19a formé à l'intérieur d'une paroi périphérique sensiblement cylindrique de la première partie 11a de la cage 11. Le rebord interne 19a empêche ainsi une désolidarisation des première et deuxième parties 11a, 11b. L'action du moyen de rappel secondaire 7 est, dans ce cas, antagoniste à celle du moyen de rappel primaire 6 qui tend à éloigner la première partie 11a de la deuxième ouverture 3, et donc également la deuxième partie 11b, le rebord interne 19a entrainant le rebord externe 19b. La deuxième partie 11b de la cage 11 pourra par ailleurs se déplacer depuis cette position initiale, dans laquelle le rebord externe 19b est en butée contre le rebord interne 19a, vers une position dite « de sur-course », dans laquelle le rebord externe 19b s'est déplacé à l'intérieur d'une ouverture latérale 19c formée le long de la paroi périphérique de la première partie 11a de telle sorte qu'il n'est plus en contact avec le rebord interne 19a. Le passage de la position initiale à la position de sur-course se produira lorsque, la cage 11 s'étant déplacée sous l'action de l'actionneur thermostatique 5, le clapet tertiaire 10 est venu au contact de son siège, c'est-à-dire à partir du moment où le clapet tertiaire 10 s'est fermé. En effet, lorsque la cage 11 poursuit son déplacement axial en direction de la deuxième ouverture 3 au-delà de la position limite où le clapet tertiaire 10 se ferme, la deuxième partie 11b de la cage 11 reste en place, le clapet tertiaire 10 butant contre son siège. En revanche, la première partie 11a de la cage 11 poursuit son avancée, ce qui amène le rebord interne 19a à s'éloigner axialement du rebord externe 19b. Durant ce déplacement relatif entre la première partie 11a et la deuxième partie 11b de la cage 11, le moyen de rappel secondaire 7 a été progressivement comprimé. Ainsi, lorsque l'actionneur thermostatique 5 exerce un effort plus faible, le moyen de rappel secondaire 7 tend à ramener la première partie 11a de la cage 11 dans sa position initiale dans laquelle le rebord externe 19b bute contre le rebord interne 19a. Dans le cas où l'effort exercé par l'actionneur thermostatique 5 est fonction de la température du fluide circulant dans la vanne, le passage de la position initiale à la position de sur-course se produira lorsque la température du fluide dépassera une deuxième température seuil, ladite deuxième température seuil correspondant à la température spécifique du fluide pour laquelle le clapet tertiaire 10 passe de son état ouvert à son état fermé.

La vanne thermostatique précédemment décrite est avantageusement employée pour construire un boîtier de sortie de liquide, du type de ceux utilisés pour réaliser une régulation thermostatique d'un circuit de liquide de refroidissement d'un moteur de véhicule automobile.

Les figures 4a-d illustrent un boîtier de sortie de liquide de refroidissement équipé de la vanne thermostatique de la figure 2, au fur et à mesure de la montée en température du liquide.

Selon une caractéristique, la première ouverture 2 de la vanne thermostatique est reliée à l'entrée d'un radiateur et permet une évacuation du liquide destiné à être refroidi. Les deuxième et la troisième ouvertures 3 et 4 définissent un circuit court à l'intérieur duquel circule le liquide de refroidissement, respectivement à destination et en provenance du moteur. Une pompe est avantageusement prévue pour assurer la circulation du liquide à l'intérieur du circuit court.

En référence à la figure 4a, il est représenté le boîtier de sortie de liquide, lorsque la température du liquide de refroidissement est inférieure à la première température seuil mentionnée précédemment. L'actionneur thermostatique 5 est totalement replié. Aussi sa bouche 14, qui forme le clapet secondaire 9, est en appui, sous l'effet du moyen de rappel secondaire 7, contre son siège ménagé dans la face d'extrémité 8 de la cage 11 qui forme aussi le clapet primaire 8. Le clapet secondaire 9 est donc fermé. Le clapet primaire 8 est en appui, sous l'effet du moyen de rappel primaire 6, contre la paroi intérieure du corps 1 qui forme son siège. Aussi le clapet primaire 8 est également fermé. La rondelle 17 est distante de la butée 18 de la cage 11 d'un décalage d. La face d'extrémité 10 de la cage 11, qui forme aussi le clapet tertiaire, ou clapet by-pass, est décollée de la paroi intérieure du corps 1 qui forme son siège. Le clapet tertiaire 10 est donc ouvert. Comme montré sur la figure 4a, le liquide circule donc à l'intérieur de la vanne de la troisième ouverture 4 vers la deuxième ouverture 3. Cette figure 4a correspond donc au fonctionnement en circuit court, lequel permet une montée rapide en température du moteur.

En référence à la figure 4b, il est représenté le boîtier de sortie de liquide, lorsque la température du liquide de refroidissement a dépassé la première température seuil mentionnée précédemment et a atteint la température intermédiaire mentionnée précédemment. L'actionneur thermostatique 5 a commencé à s'étendre. Ce faisant, sa bouche 14 s'est décollé de son siège, ouvrant ainsi le clapet secondaire 9. La rondelle 17 est venue au contact de la butée 18 de la cage 11, mais n'a pas encore déplacé la cage 11. De ce fait, le clapet primaire 8 est toujours en appui, sous l'effet du moyen de rappel primaire 6, contre la paroi intérieure du corps 1 qui forme son siège et le clapet tertiaire 10 est toujours décollée de la paroi intérieure du corps 1 qui forme son siège. Aussi le clapet primaire 8 reste fermé et le clapet tertiaire 10 reste ouvert. Comme montré sur la figure 4b, une majeure partie du liquide continue de circuler à l'intérieur de la vanne de la troisième ouverture 4 vers la deuxième ouverture 3, mais une faible proportion de liquide passe désormais à travers le clapet secondaire 9 et circule vers la première ouverture 2.

En référence à la figure 4c, il est représenté le boîtier de sortie de liquide, lorsque la température du liquide de refroidissement a dépassé la température intermédiaire mentionnée précédemment et a atteint la deuxième température seuil mentionnée précédemment. L'actionneur thermostatique 5 a poursuivi son extension de telle sorte que la rondelle 17 a entrainé la cage 11 dans son mouvement axial en direction de la deuxième ouverture 3. Ceci a pour effet d'éloigner la cage 11 de la première ouverture 2 et d'ouvrir le clapet primaire 8. Par ailleurs, le clapet tertiaire 10 s'est déplacé jusqu'à venir au contact de son siège. Le clapet tertiaire 10 est donc fermé. Aucun déplacement relatif entre la première partie 11a et le deuxième partie 11b de la cage 11 ne s'est encore produit. Comme montré sur la figure 4c, le liquide circule désormais à l'intérieur de la vanne de la troisième ouverture 4 vers la première ouverture 2. Cette figure 4c correspond donc à une circulation du liquide de refroidissement trop chaud en direction du radiateur.

En référence à la figure 4d, il est représenté le boîtier de sortie de liquide, lorsque la température du liquide de refroidissement a dépassé la deuxième température seuil mentionnée précédemment. L'actionneur thermostatique 5 a poursuivi son extension de telle sorte que la rondelle 17 a entrainé la première partie 11a de la cage 11 dans son mouvement axial en direction de la deuxième ouverture 3, tandis que la deuxième partie 11b est restée en place. Ceci a eu pour effet de comprimer le moyen de rappel secondaire 7. Les clapets primaire et secondaire 8, 9 sont restés ouverts et le clapet tertiaire 10 est resté fermé. Comme montré sur la figure 4d, le liquide continue donc de circuler à l'intérieur de la vanne de la troisième ouverture 4 vers la première ouverture 2. Cette figure 4d correspond donc au fonctionnement en sur-course de l'actionneur thermostatique 5.

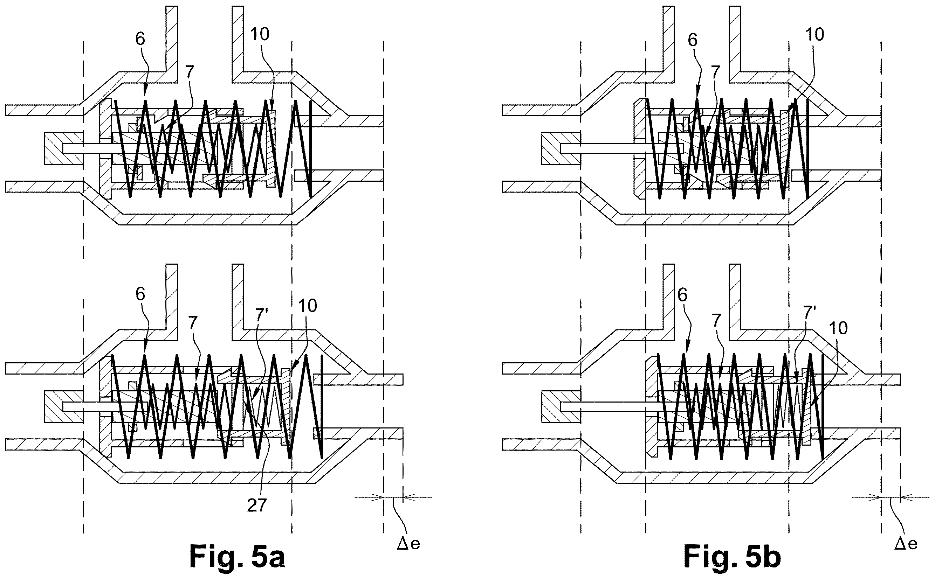

En référence aux figures 5a et 5b, il est représenté des vues comparatives de deux vannes thermostatiques, à savoir une vanne thermostatique conforme à l'invention (sur la figure du haut) et une vanne thermostatique non conforme à l'invention (sur la figure du bas), respectivement avec le clapet primaire fermé et le clapet tertiaire ouvert (figure 5a) et avec le clapet primaire ouvert et le clapet tertiaire fermé (figure 5b). La vanne thermostatique non conforme à l'invention se différentie principalement de celle de l'invention par la présence d'un moyen de rappel supplémentaire 7', dit moyen de rappel de compensation, destiné à repousser le clapet tertiaire 10 contre son siège, l'un des points d'actionnement dudit moyen de rappel de compensation 7' étant constitué par une face d'extrémité 27 de la première partie 11a de la cage 11, ladite face d'extrémité 27 constituant également l'un des points d'actionnement du moyen de rappel secondaire 7. Il faut constater que l'utilisation d'un moyen de rappel supplémentaire dans la vanne thermostatique non conforme à l'invention engendre un encombrement supplémentaire Δe par rapport à la vanne thermostatique selon l'invention. La vanne thermostatique de l'invention présente donc un avantage supplémentaire par rapport à cette vanne thermostatique.

## Revendications

1. Vanne thermostatique comprenant un corps (1) creux fermé, une première ouverture (2) de circulation de fluide, une deuxième ouverture (3) de circulation de fluide et une troisième ouverture (4) de circulation de fluide débouchant dans le corps (1), et un obturateur séparant sélectivement la première ouverture (2) de la deuxième ouverture (3) et/ou troisième ouverture (4) et comprenant :
- un actionneur thermostatique (5) sensible aux variations de température du fluide circulant dans le corps,
- un moyen de rappel primaire (6),
- un moyen de rappel secondaire (7),
- un clapet primaire (8) apte à s'ouvrir sous l'action de l'actionneur thermostatique (5) et à se fermer sous l'action du moyen de rappel primaire (6),
- un clapet secondaire (9) apte à s'ouvrir sous l'action de l'actionneur thermostatique (5) et à se fermer sous l'action du moyen de rappel secondaire (7), et
- un clapet tertiaire (10) apte à se fermer sous l'action de l'actionneur thermostatique (5) et à s'ouvrir sous l'action du moyen de rappel primaire (6),
dans laquelle l'obturateur est conformé de manière à ce que l'actionneur thermostatique (5) ouvre d'abord le clapet secondaire (9) puis le clapet primaire (8), avec un décalage (d), avant de fermer le clapet tertiaire (10), et
dans laquelle le clapet secondaire (9) est configuré pour sélectivement ouvrir et fermer une lumière (8a) découpée dans le clapet primaire (8).

2. Vanne thermostatique selon la revendication 1, dans laquelle le clapet primaire (8), respectivement le clapet tertiaire (10), est configuré pour sélectivement ouvrir et fermer la première ouverture (2), respectivement la deuxième ouverture (3).

3. Vanne thermostatique selon l'une quelconque des revendications précédentes, dans laquelle le clapet primaire (8), le clapet secondaire (9) et le clapet tertiaire (10) sont coaxiaux.

4. Vanne thermostatique selon l'une quelconque des revendications précédentes, dans laquelle l'actionneur thermostatique (5) possède deux points d'actionnement, à savoir un premier point d'actionnement solidaire du corps (1) et un deuxième point d'actionnement solidaire du clapet secondaire (9), et est apte à faire varier la distance et/ou l'effort entre ces deux points d'actionnement.

5. Vanne thermostatique selon l'une quelconque des revendications précédentes, dans laquelle le moyen de rappel secondaire (7) comprend deux points d'actionnement, à savoir un premier point d'actionnement, correspondant à une extrémité du moyen de rappel secondaire, qui est solidaire en translation du clapet secondaire (9), et un deuxième point d'actionnement, correspondant à l'autre extrémité du moyen de rappel secondaire, qui est solidaire en translation du clapet tertiaire (10), et est apte à varier l'effort exercé en fonction de la distance entre ces deux points d'actionnement.

6. Vanne thermostatique selon la revendication précédente, dans laquelle le moyen de rappel secondaire (7) exerce sur le clapet secondaire (9) une action antagoniste à celle de l'actionneur thermostatique (5) et sur le clapet tertiaire (10) une action antagoniste à celle du moyen de rappel primaire (6) lorsque le clapet tertiaire (10) est ouvert et une action agoniste à celle du moyen de rappel primaire (6) lorsque le clapet tertiaire (10) est fermé.

7. Vanne thermostatique selon l'une quelconque des revendications précédentes, dans laquelle le moyen de rappel primaire (6) comprend deux points d'actionnement, à savoir un premier point d'actionnement, correspondant à une extrémité du moyen de rappel primaire (6), qui est solidaire en translation du clapet primaire (8), et un deuxième point d'actionnement, correspondant à l'autre extrémité du moyen de rappel primaire (6), qui est en appui sur le corps (1), et est apte à varier l'effort exercé en fonction de la distance entre ces deux points d'actionnement.

8. Vanne thermostatique selon la revendication précédente, dans laquelle le moyen de rappel primaire (6) exerce sur le clapet primaire (8) une action antagoniste à celle de l'actionneur thermostatique (5).

9. Vanne thermostatique selon l'une quelconque des revendications précédentes, comprenant en outre une cage (11) solidaire du clapet primaire (8) et conformée pour être entraînée, avec le décalage (d), par l'actionneur thermostatique (5).

10. Vanne thermostatique selon la revendication précédente, dans laquelle la cage (11) enveloppe l'actionneur thermostatique (5) et est percée pour permettre une irrigation de l'actionneur thermostatique (5).

11. Vanne thermostatique selon l'une des revendications 9 ou 10, dans laquelle l'actionneur thermostatique (5) comprend une tige (13) et un cylindre (12) comprenant, à une extrémité, une bouche (14) permettant une sortie de la tige (13) selon son axe et, à l'autre extrémité, un culot (16), et dans laquelle une extrémité distale de la tige (13) est solidaire du corps (1) et la bouche (14) est solidaire du clapet secondaire (9).

12. Vanne thermostatique selon la revendication précédente, comprenant en outre une rondelle (17) configurée pour, lors de l'extension de l'actionneur thermostatique (5), être entrainée axialement par une collerette annulaire (15) disposée en saillie à la périphérie du cylindre (12) et venir en contact avec une butée interne (18) de la cage (11), provoquant ainsi l'ouverture du clapet primaire (8), la distance axiale entre la rondelle (15) et la butée interne (18), les clapets primaire et secondaire (8, 9) étant tous deux fermés, définissant le décalage (d).

13. Vanne thermostatique selon l'une quelconque des revendications 9 à 12, dans laquelle la cage (11) comprend une première partie (11a) et une deuxième partie (11b) coulissant axialement à l'intérieur de la première partie (11a), la première partie (11a) possédant une première face d'extrémité définissant le clapet primaire (8) et la deuxième partie (11b) possédant une deuxième face d'extrémité définissant le clapet tertiaire (10).

14. Vanne thermostatique selon la revendication précédente, dans laquelle le moyen de rappel secondaire (7) est disposé à l'intérieur de la cage (11) partiellement à l'intérieur de la première partie (11a) et partiellement à l'intérieur de la deuxième partie (11b) et de telle sorte qu'il tend à éloigner la deuxième face d'extrémité de la première face d'extrémité.

15. Vanne thermostatique selon la revendication précédente, dans laquelle la première partie (11a) est munie d'un rebord interne (19a) contre lequel vient buter un rebord externe (19b) de la deuxième partie (11b), lorsque le clapet tertiaire (10) est ouvert, l'augmentation de la température du fluide au-delà d'une température de fermeture du clapet tertiaire (10) amenant progressivement ledit rebord externe (19b) à s'éloigner axialement dudit rebord interne (19a).

16. Vanne thermostatique selon l'une quelconque des revendications précédentes, dans laquelle le moyen de rappel secondaire (7), respectivement le moyen de rappel primaire (6), est dimensionné pour appliquer un effort garantissant la fermeture du clapet secondaire (9), respectivement du clapet primaire (8), éventuellement augmenté de manière à tenir compte d'une contre-pression.

17. Vanne thermostatique selon l'une quelconque des revendications précédentes, dans laquelle la section d'ouverture du clapet primaire (8), respectivement du clapet secondaire (9), est dimensionnée pour passer un débit maximal, respectivement un débit minimal.

18. Boîtier d'entrée de fluide ou de sortie de fluide, pour régulation thermostatique d'un circuit de fluide, comprenant une vanne thermostatique selon l'une quelconque des revendications précédentes.

19. Utilisation d'un boîtier selon la revendication précédente pour la régulation d'un liquide de refroidissement pour moteur de véhicule automobile, dans laquelle la troisième ouverture (4) forme une entrée pour l'arrivée d'un liquide de refroidissement provenant d'un moteur d'un véhicule automobile, la première ouverture (2) formant une sortie de liquide menant à un radiateur dudit véhicule automobile et la deuxième ouverture (3) formant une sortie de liquide menant à nouveau au moteur.

## Patentansprüche

1. Thermostatventil, umfassend einen geschlossenen Hohlkörper (1), eine erste Fluidzirkulationsöffnung (2), eine zweite Fluidzirkulationsöffnung (3) und eine dritte Fluidzirkulationsöffnung (4), die in den Körper (1) ausmünden, und einen Verschluss, der die erste Öffnung (2) von der zweiten Öffnung (3) und/oder dritten Öffnung (4) selektiv trennt und umfassend:
- einen Thermostataktuator (5), der für Temperaturschwankungen des in dem Körper zirkulierenden Fluids empfindlich ist,
- ein primäres Rückstellmittel (6),
- ein sekundäres Rückstellmittel (7),
- eine primäre Klappe (8), die imstande ist, sich unter der Wirkung des Thermostataktuators (5) zu öffnen und sich unter der Wirkung des primären Rückstellmittels (6) zu schließen,
- eine sekundäre Klappe (9), die imstande ist, sich unter der Wirkung des Thermostataktuators (5) zu öffnen und sich unter der Wirkung des sekundären Rückstellmittels (7) zu schließen, und
- eine tertiäre Klappe (10), die imstande ist, sich unter der Wirkung des Thermostataktuators (5) zu schließen und sich unter der Wirkung des primären Rückstellmittels (6) zu öffnen,
wobei der Verschluss derart ausgebildet ist, dass der Thermostataktuator (5) zunächst die sekundäre Klappe (9), dann die primäre Klappe (8) mit einem Versatz (d) vor dem Schließen der tertiären Klappe (10) öffnet, und
wobei die sekundäre Klappe (9) ausgelegt ist, um eine in der primären Klappe (8) ausgeschnittene Öffnung (8a) selektiv zu öffnen und zu schließen.

2. Thermostatventil nach Anspruch 1, wobei die primäre Klappe (8) beziehungsweise die tertiäre Klappe (10) ausgelegt ist, um die erste Öffnung (2) beziehungsweise die zweite Öffnung (3) selektiv zu öffnen und zu schließen.

3. Thermostatventil nach einem der vorangehenden Ansprüche, wobei die primäre Klappe (8), die sekundäre Klappe (9) und die tertiäre Klappe (10) koaxial sind.

4. Thermostatventil nach einem der vorangehenden Ansprüche, wobei der Thermostataktuator (5) zwei Betätigungspunkte besitzt, nämlich einen ersten Betätigungspunkt, der mit dem Körper (1) fest verbunden ist, und einen zweiten Betätigungspunkt, der mit der sekundären Klappe (9) fest verbunden ist und imstande ist, den Abstand und/oder die Kraft zwischen diesen zwei Betätigungspunkten zu verändern.

5. Thermostatventil nach einem der vorangehenden Ansprüche, wobei das sekundäre Rückstellmittel (7) zwei Betätigungspunkte umfasst, nämlich einen ersten Betätigungspunkt, der einem Ende des sekundären Rückstellmittels entspricht, der mit der sekundäre Klappe (9) translatorisch fest verbunden ist, und einen zweiten Betätigungspunkt, der dem anderen Ende des sekundären Rückstellmittels entspricht, der mit der tertiären Klappe (10) translatorisch fest verbunden ist, und imstande ist, die in Abhängigkeit vom Abstand zwischen diesen zwei Betätigungspunkten ausgeübte Kraft zu verändern.

6. Thermostatventil nach vorangehendem Anspruch, wobei das sekundäre Rückstellmittel (7) auf die sekundäre Klappe (9) eine Wirkung ausübt, die zu der des Thermostataktuators (5) antagonistisch ist, und auf die tertiäre Klappe (10) eine Wirkung, die auf die des primären Rückstellmittels (6) antagonistisch ist, wenn die tertiäre Klappe (10) geöffnet ist, und eine Wirkung, die zu der des primären Rückstellmittels (6) agonistisch ist, wenn die tertiäre Klappe (10) geschlossen ist.

7. Thermostatventil nach einem der vorangehenden Ansprüche, wobei das primäre Rückstellmittel (6) zwei Betätigungspunkte umfasst, nämlich einen ersten Betätigungspunkt, der einem Ende des primären Rückstellmittels (6) entspricht, der mit der primären Klappe (8) translatorisch fest verbunden ist, und einen zweiten Betätigungspunkt, der dem anderen Ende des primären Rückstellmittels (6) entspricht, der sich auf dem Körper (1) abstützt, und imstande ist, die in Abhängigkeit vom Abstand zwischen diesen zwei Betätigungspunkten ausgeübte Kraft zu verändern.

8. Thermostatventil nach vorangehendem Anspruch, wobei das primäre Rückstellmittel (6) auf die primäre Klappe (8) eine Wirkung ausübt, die zu der des Thermostataktuators (5) antagonistisch ist.

9. Thermostatventil nach einem der vorangehenden Ansprüche, umfassend ferner einen Käfig (11), der mit der primären Klappe (8) fest verbunden ist und ausgebildet, um von dem Thermostataktuator (5) mit dem Versatz (d) angetrieben zu werden.

10. Thermostatventil nach vorangehendem Anspruch, wobei der Käfig (11) den Thermostataktuator (5) umschließt und durchbrochen ist, um eine Bewässerung des Thermostataktuators (5) zu gestatten.

11. Thermostatventil nach einem der Ansprüche 9 oder 10, wobei der Thermostataktuator (5) eine Stange (13) und einen Zylinder (12) umfasst, der an einem Ende eine Mündung (14), die einen Austritt der Stange (13) gemäß dessen Achse umfasst, und am anderen Ende einen Sockel (16) umfasst, und wobei ein distales Ende der Stange (13) mit dem Körper (1) fest verbunden ist und die Mündung (14) mit der sekundären Klappe (9) fest verbunden ist.

12. Thermostatventil nach vorangehendem Anspruch, umfassend ferner eine Scheibe (17), die ausgelegt ist, um bei der Erweiterung des Thermostataktuators (5) von einem ringförmigen Kragen (15) axial angetrieben zu werden, der hervorstehend an der Peripherie des Zylinders (12) angeordnet ist und mit einem inneren Anschlag (18) des Käfigs (11) in Kontakt zu kommen, so dass sich die primäre Klappe (8) öffnet, wobei der axiale Abstand zwischen der Scheibe (15) und dem inneren Anschlag (18), wobei beide, die primäre und sekundäre Klappe (8, 9) geschlossen sind, den Versatz (d) definiert.

13. Thermostatventil nach einem der Ansprüche 9 bis 12, wobei der Käfig (11) einen ersten Teil (11a) und einen zweiten Teil (11b) umfasst, der im Inneren des ersten Teils (11a) axial gleitet, wobei der erste Teil (11a) eine erste Endfläche besitzt, die die primäre Klappe (8) definiert, und der zweite Teil (11b) eine zweite Endfläche besitzt, die die tertiäre Klappe (10) definiert.

14. Thermostatventil nach vorangehendem Anspruch, wobei das sekundäre Rückstellmittel (7) im Inneren des Käfigs (11) teilweise im Inneren des ersten Teils (11a) und teilweise im Inneren des zweiten Teils (11b) und derart angeordnet ist, dass es darauf abzielt, die zweite Endfläche von der ersten Endfläche zu entfernen.

15. Thermostatventil nach vorangehendem Anspruch, wobei der erste Teil (11a) mit einer inneren Kante (19a) versehen ist, an der eine äußere Kante (19b) des zweiten Teils (11b) in Anschlag kommt, wenn die tertiäre Klappe (10) geöffnet ist, wobei die Erhöhung der Temperatur des Fluids über eine Schließtemperatur der tertiären Klappe (10) hinaus die äußere Kante (19b) schrittweise dazu veranlasst, sich von der inneren Kante (19a) axial zu entfernen.

16. Thermostatventil nach einem der vorangehenden Ansprüche, wobei das sekundäre Rückstellmittel (7) beziehungsweise das primäre Rückstellmittel (6) bemessen ist, um eine Kraft auszuüben, die das Schließen der sekundären Klappe (9) beziehungsweise der primären Klappe (8) garantiert, eventuell derart erhöht, dass ein Gegendruck berücksichtigt wird.

17. Thermostatventil nach einem der vorangehenden Ansprüche, wobei der Öffnungsquerschnitt der primären Klappe (8) beziehungsweise der sekundären Klappe (9) bemessen ist, um einen maximalen Durchsatz beziehungsweise einen minimalen Durchsatz hindurchzulassen.

18. Fluideinlass- oder Fluidauslassgehäuse zur Thermostatregulierung eines Fluidkreises, umfassend ein Thermostatventil nach einem der vorangehenden Ansprüche.

19. Verwendung eines Gehäuses nach vorangehendem Anspruch zur Regulierung einer Kühlflüssigkeit für einen Kraftfahrzeugmotor, wobei die dritte Öffnung (4) einen Einlass für die Ankunft einer Kühlflüssigkeit bildet, die von einem Motor eines Kraftfahrzeugs kommt, wobei die erste Öffnung (2) einen Flüssigkeitsaustritt bildet, der zu einem Kühler des Kraftfahrzeugs führt, und die zweite Öffnung (3) einen Flüssigkeitsaustritt bildet, der erneut zum Motor führt.

## Claims

1. A thermostatic valve comprising a closed hollow body (1), a first fluid circulation opening (2), a second fluid circulation opening (3) and a third fluid circulation opening (4) leading into the body (1), and a shutter which is selectively separating the first opening (2) from the second opening (3) and/or third opening (4) and comprising:
- a thermostatic actuator (5) which is sensitive to the variations in temperature of the fluid circulating in the body,
- primary return means (6),
- secondary return means (7),
- a primary flap (8) capable of being opened under the action of the thermostatic actuator (5) and of being closed under the action of the primary return means (6),
- a secondary flap (9) capable of being opened under the action of the thermostatic actuator (5) and of being closed under the action of the secondary return means (7), and
- a tertiary flap (10) capable of being closed under the action of the thermostatic actuator (5) and of being opened under the action of the primary return means (6),
wherein the shutter is shaped so that the thermostatic actuator (5) first opens the secondary flap (9) then the primary flap (8), with an offset (d), before closing the tertiary flap (10), and
wherein the secondary flap (9) is configured to selectively open and close a lumen (8a) which is cut in the primary flap (8).

2. The thermostatic valve according to claim 1, wherein the primary flap (8), respectively the tertiary flap (10), is configured to selectively open and close the first opening (2), respectively the second opening (3).

3. The thermostatic valve according to any one of the preceding claims, wherein the primary flap (8), the secondary flap (9) and the tertiary flap (10) are coaxial.

4. The thermostatic valve according to any one of the preceding claims, wherein the thermostatic actuator (5) has two actuation points, namely a first actuation point secured to the body (1) and a second actuation point secured to the secondary flap (9), and is capable of varying the distance and/or the force between these two actuation points.

5. The thermostatic valve according to any one of the preceding claims, wherein the secondary return means (7) comprises two actuation points, namely a first actuation point, corresponding to one end of the secondary return means, which is secured in translation to the secondary flap (9), and a second actuation point, corresponding to the other end of the secondary return means which is secured in translation to the tertiary flap (10), and is capable of varying the force which is exerted depending on the distance between these two actuation points.

6. The thermostatic valve according to the preceding claim, wherein the secondary return means (7) exerts, on the secondary flap (9), an action antagonistic to that of the thermostatic actuator (5) and, on the tertiary flap (10), an action antagonistic to that of the primary return means (6) when the tertiary flap (10) is open and an action agonistic to that of the primary return means (6) when the tertiary flap (10) is closed.

7. The thermostatic valve according to any one of the preceding claims, wherein the primary return means (6) comprises two actuation points, namely a first actuation point, corresponding to one end of the primary return means (6), which is secured in translation to the primary flap (8), and a second actuation point, corresponding to the other end of the primary return means (6), which bears on the body (1), and is capable of varying the force exerted depending on the distance between these two actuation points.

8. The thermostatic valve according to the preceding claim, wherein the primary return means (6) exerts, on the primary flap (8), an action antagonistic to that of the thermostatic actuator (5).

9. The thermostatic valve according to any one of the preceding claims, further comprising a cage (11) secured to the primary flap (8) and shaped to be driven, with the offset (d), by the thermostatic actuator (5).

10. The thermostatic valve according to the preceding claim, wherein the cage (11) envelops the thermostatic actuator (5) and is pierced to allow an irrigation of the thermostatic actuator (5).

11. The thermostatic valve according to any of claims 9 or 10, wherein the thermostatic actuator (5) comprises a rod (13) and a cylinder (12) comprising, at one end, a mouth (14) allowing an exit of the rod (13) along the axis thereof and, at the other end, a base (16), and wherein one distal end of the rod (13) is secured to the body (1) and the mouth (14) is secured to the secondary flap (9).

12. The thermostatic valve according to the preceding claim, further comprising a washer (17) configured to, when extending the thermostatic actuator (5), be driven axially by an annular flange (15) disposed to protrude at the periphery of the cylinder (12) and come into contact with an inner stop (18) of the cage (11), thus causing the opening of the primary flap (8), the axial distance between the washer (15) and the inner stop (18), the primary and secondary flaps (8, 9) being both closed, defining the offset (d).

13. The thermostatic valve according to any one of claims 9 to 12, wherein the cage (11) comprises a first portion (11a) and a second portion (11b) sliding axially inside the first portion (11a), the first portion (11a) having a first end face defining the primary flap (8) and the second portion (11b) having a second end face defining the tertiary flap (10).

14. The thermostatic valve according to the preceding claim, wherein the secondary return means (7) is disposed inside the cage (11) partially inside the first portion (11a) and partially inside the second portion (11b) and such that it tends to move the second end face away from the first end face.

15. The thermostatic valve according to the preceding claim, wherein the first portion (11a) is provided with an inner rim (19a) against which an outer rim (19b) of the second portion (11b) abuts, when the tertiary flap (10) is open, the increase in the temperature of the fluid beyond a closure temperature of the tertiary flap (10) causing gradually said outer rim (19b) to be moved away axially from said inner rim (19a).

16. The thermostatic valve according to any one of the preceding claims, wherein the secondary return means (7), respectively the primary return means (6), is dimensioned to apply a force guaranteeing the closure of the secondary flap (9), respectively of the primary flap (8), possibly increased so as to take account of a counter-pressure.

17. The thermostatic valve according to any one of the preceding claims, wherein the opening section of the primary flap (8), respectively of the secondary flap (9), is dimensioned to pass a maximum flow rate, respectively a minimum flow rate.

18. A fluid inlet or fluid outlet casing, for a thermostatic regulation of a fluid circuit, comprising a thermostatic valve according to any one of the preceding claims.

19. A use of a casing according to the preceding claim for regulating a coolant for a motor vehicle engine, wherein the third opening (4) forms an inlet for the arrival of a coolant from an engine of a motor vehicle, the first opening (2) forming a liquid outlet leading to a radiator of said motor vehicle and the second opening (3) forming a liquid outlet leading again to the engine.
